# EUROPÄISCHE PATENTSCHRIFT

(11) **EP 2 322 030 B1**
(45) Veröffentlichungstag und Bekanntmachung des Hinweises auf die Patenterteilung: **27.08.2014**
(21) Anmeldenummer: 10450175.4
(22) Anmeldetag: 11.11.2010
(51) Int. Cl.: A01G 3/037, B26B 13/26, B26B 15/00

(54) **Schere**
Cutter
Ciseaux

(30) Priorität: 17.11.2009 AT 18172009
(43) Veröffentlichungstag der Anmeldung: 18.05.2011
(73) Patentinhaber: Lunatone Industrielle Elektronik GmbH, 1220 Wien (AT)
(72) Erfinder: Mair, Alexander, 2285 Breitstetten (AT)
(74) Vertreter: Patentanwaltskanzlei Matschnig & Forsthuber OG

(56) Entgegenhaltungen:
- WO-A1-91/15944
- WO-A1-2007/139273
- DE-A1- 19 858 382
- DE-U1- 8 805 195
- FR-A1- 2 541 167
- GB-A- 2 302 665

## Beschreibung

Die Erfindung betrifft eine Schere mit einem feststehenden Messer und einem um eine Drehachse schwenkbar gelagerten beweglichen Messer, mit einem Antrieb, welcher eine Anlenkeinrichtung antreibt, und wobei die Anlenkeinrichtung mit dem beweglichen Messer verbunden ist, wobei das bewegliche Messer zumindest zwei Anlenkpunkte für eine gelenkige Verbindung mit der Anlenkeinrichtung aufweist, und wobei die Anlenkeinrichtung je nach Anlenkpunkt, an welchem sie angreift, unterschiedliche Hebellängen in Bezug auf die Drehachse des beweglichen Messers aufweist, und wobei die Anlenkeinrichtung zwischen den beiden Anlenkpunkten umschaltbar ist, und wobei das bewegliche Messer eine schlitzförmige Öffnung aufweist, deren Endanschlagsbereiche die beiden äußeren Anlenkpunkte für die Anlenkeinrichtung bilden.

Eine elektrische Schere ist aus der EP 291 431 B1 bekannt, welche zum Antreiben eines beweglichen Messers ein Spindelhubgetriebe aufweist, das aus einer Kugelgewindespindel und einer Kugelgewindemutter besteht, wobei die Kugelgewindespindel mit der Abtriebswelle eines elektrischen Getriebemotors verbunden ist. Der Getriebemotor ist in einem als Handgriff für die Schere ausgebildeten Scherengehäuse befestigt. Die auf der Kugelgewindespindel vorgesehene Kugelgewindemutter ist über eine Anlenkeinrichtung in Form eines Lenkers mit dem ebenfalls im Gehäuse schwenkbar gelagerten Messer verbunden, das mit einem gehäusefesten Messer scherenartig zusammen wirkt. Der Lenker greift dabei an der Kugelgewindemutter über einen diese Mutter formschlüssig aufnehmenden Kopf an, auf dem zusätzlich ein Steuerhebel zur Betätigung des Getriebemotors gelagert ist.

Eine weitere elektrische Schere ist aus der AT 501 590 B1 bekannt, bei welcher die Kugelgewindemutter drehbar aber axial unverschieblich gehaltert und mit dem Antrieb eines Getriebemotors verbunden ist. Eine Kugelgewindespindel ist in der Kugelgewindemutter angeordnet und ist gegenüber Verdrehung abgestützt. An dieser Kugelgewindespindel ist eine Anlenkeinrichtung in Form eines Lenkers an einer Anlenkachse angelenkt und bei einer axialen Bewegung der Kugelgewindespindel wird über den Lenker das bewegliche Messer verschwenkt.

Beim Schneiden von Gegenständen etwa in Form von Ästen ergeben sich häufig zwei Probleme. Das eine Problem besteht darin, dass bei dicken Gegenständen oftmals die nötige Kraft zum Durchschneiden von bekannten Scheren nicht aufgebracht werden kann. Scheren, welche die notwendigen Kräfte aufbringen, sind im Betrieb zumeist langsam, sodass bei dünneren Gegenständen die Schnittgeschwindigkeit gering ist.

Ein zweites Problem besteht darin, dass viele Scheren eine relativ geringe Öffnungsweite zwischen den Messern erreichen, also der maximale Öffnungswinkel der Messer gering ist, was zwar eine hohe Schnittgeschwindigkeit erlaubt, aber die zu schneidenden Gegenstände hinsichtlich ihrer Dimensionen eingeschränkt sind, also nur eher dünne Gegenstände geschnitten werden können.

Aus der GB 2 302 665 A ist eine manuell zu betätigende Schere benannt, bei welcher die Anlenkeinrichtung an unterschiedlichen Anlenkpunkten angreifen kann. Auf diese Weise können bei gleichbleibender Griffweite unterschiedliche hohe Schneidkräfte realisiert werden.

Es ist eine Aufgabe der Erfindung, eine Schere zu schaffen, welche in Hinblick auf die oben genannte Probleme Verbesserungen bietet.

Es ist eine Aufgabe der Erfindung, eine Schere zu schaffen, mit welcher bei größeren Öffnungswinkeln der Messer eine größere Schneidekraft auf das zu schneidende Gut ausgeübt werden als bei geringen Öffnungswinkeln.

Außerdem ist es eine Aufgabe der Erfindung, eine Schere zu schaffen, mit welcher große Öffnungswinkel realisiert werden können.

Diese Aufgabe wird mit einer eingangs erwähnten Schere dadurch gelöst, dass erfindungsgemäß
die Anlenkeinrichtung aus einem Lenker besteht, und
die Außenkontur des feststehenden Messers derart ausgebildet oder die kinematische Beziehung zwischen dem Lenker und der schlitzförmigen Öffnung derart gewählt ist, dass ab einem definierten Öffnungswinkel der beiden Messer der Lenker an der Außenkontur des feststehenden Messers mit einem Auflaufbereich aufläuft und mit weiter zunehmendem Öffnungswinkel der Lenker von einem ersten Endanschlagsbereich, welcher einer geringeren Hebellänge entspricht, sukzessive in einen zweiten Endanschlagsbereich bewegt wird, welcher einem längeren Hebelarm entspricht, oder
die Anordnung der schlitzförmigen Öffnung in Bezug auf den Lenker derart ist, dass bei einem Öffnen der Messer ab einem gewissen Öffnungswinkel der Messer der Lenker in der schlitzförmigen Öffnung von dem ersten äußeren Anlenkpunkt mit der kürzesten Hebelänge in Richtung des zweiten äußeren Anlenkpunktes zu größeren Hebellängen hin verschoben wird, und bei einem Schließen der Messer zum Schneiden die aktuelle Hebellänge beibehalten wird.

Durch das Vorsehen von zumindest zwei unterschiedlichen Anlenkpunkten, über welche die Anlenkeinrichtung die Kraft des Antriebes auf das bewegliche Messer übertragen kann, ist es möglich, entweder eine erhöhte Kraft auf das zu schneidende Gut auszuüben oder, falls dies nicht notwendig ist, das bewegliche Messer über einen kurzen Hebel anzutreiben, sodass im Normalbetrieb bei dünnerem Schnittgut die Geschwindigkeit nicht leidet.

Es können also bei gleicher vom Antrieb ausgeübter Kraft höhere Schneidkräfte ausgeübt werden als bei einer herkömmlichen Schere, welche nicht über unterschiedliche Anlenkpunkte verfügt. Es kann somit mit einem schwächeren Motor die gleiche Schneidkraft realisiert oder mit einem gleich starken Motor eine höhere Schneidkraft realisiert werden.

Erfindungsgemäß wird weiters mit zunehmendem Öffnungswinkel der Hebel verlängert und anschließend, beim Schließen der Messer wird die auf das zu schneidende Gut ausübbare Kraft entsprechend erhöht.

Außerdem wird es mit der Erfindung möglich, falls es keine baulichen Einschränkungen gibt, über das Umschalten auf einen größeren Hebel auch den Öffnungswinkel der Messer zu vergrößern, sodass einerseits dickeres Schnittgut überhaupt geschnitten werden kann, und andererseits dann insbesondere mit einer entsprechend hohen Kraft.

Der Lenker ist beispielsweise direkt oder über eine Kupplung oder ein Getriebe mit dem Antrieb verbunden. Im einfachsten Fall ist der Lenker direkt über ein Gelenk mit einem Stellelement eines Motors verbunden und setzt eine Linearbewegung des Stellelementes des Motors in eine Verschwenkbewegung des beweglichen Messers um.

Der Lenker ist mit dem beweglichen Messer gelenkig verbunden und dazu bei der vorgestellten Variante in dem Schlitz entsprechend angeordnet. Durch die verschiebbare Anbringung des Lenkers in der schlitzförmigen Öffnung (Schlitz) kann der Lenker sich zwischen den Enden (Endanschlagsbereichen) des Schlitzes bewegen, wodurch unterschiedliche Hebellängen um die Drehachse realisiert werden können.

Bei geringen Schneidkräften greift der Lenker in der Position, welche dem kürzeren Hebel entspricht, an, wodurch sich schnellere Schneidbewegungen der Messer realisieren lassen. Bei größeren Schneidkräften wirkt der Lenker über den (unteren) Endanschlagsbereich, welcher einen längeren Hebel realisiert. Hier ist ein größerer Weg des Lenkers notwendig, um einen bestimmten Verschwenkweg des Messers zu erzielen (im Vergleich zum kürzeren Hebel), allerdings kann dadurch auch mehr Kraft auf das zu schneidende Gut ausgeübt werden.

Beispielsweise kann ein Fixierelement zum gelenkigen Fixieren des Lenkers in zumindest einem Endanschlagsbereich vorgesehen ist. Bei dieser Ausgestaltung ist ein manuelles Umstellen notwendig. Der Benutzer kann durch Fixieren des Lenkers z.B. in der Position mit dem kürzeren Hebel schnelle Schneidbewegungen erzielen. Sind höhere Schneidkräfte notwendig, kann der Benutzer die Fixierung lösen und der Lenker "gleitet" bei entsprechender Belastung automatisch in die zweite Position.

Es kann aber auch vorgesehen sein, dass ein Fixierelement vorgesehen ist, mit welchem der Lenker in einer beliebigen Position in dem Schlitz fixiert werden kann.

Von besonderem Vorteil ist es bei dieser Variante, wenn die schlitzförmige Öffnung zwischen ihren beiden Endanschlagsbereichen eine Rasterung zum lösbaren Einrasten des Lenkers aufweist.

Bei dieser Ausgestaltung ist der Lenker einerseits stabil in den gewählten Endanschlagsbereichen gehalten, es können aber auch noch Zwischenpositionen realisiert werden, sodass das Messer mit unterschiedlich großen maximalen Öffnungswinkeln und entsprechend unterschiedlich großen Hebellängen betrieben werden kann.

Bei einer einfach zu realisierenden Variante der Erfindung ist der Lenker starr ausgebildet und mit dem Antrieb gelenkig verbunden.

Damit ein zuverlässiges automatisches Verstellen des Hebels je nach notwendiger Schneidkraft möglich ist, ist bei einigen der oben beschriebenen Varianten zweckmäßig oder notwendig, dass der Lenker gegen die Rückstellkraft von zumindest einem Rückstellelement zwischen den beiden Endanschlagsbereichen verstellbar ist.

Dabei kann es sich beispielsweise um eine Druckfeder oder Zugfeder in dem Schlitz in dem feststehenden Messer handeln, welches den Lenker in den Endanschlagsbereich mit der geringsten Hebellänge drückt/zieht. Bei zunehmender Schneidkraft wird diese Rückstellkraft überwunden und der Lenker bewegt sich in dem Schlitz je nach Schneidkraft aus dem Endanschlagsbereich mit kurzem Hebel in Richtung Endanschlagbereich mit großem Hebel.

Das Rückstellelement ist aber vorzugsweise außerhalb des Schlitzes angeordnet und z.B. mit dem feststehenden Messer oder dem Gehäuse der Schere verbunden und wirkt in etwa in Form einer Druck- oder Zugfeder auf den Lenker.

Es kann aber auch vorgesehen sein, dass der Lenker biegeelastisch ausgebildet ist, wodurch ein separates Rückstellelement entfallen kann.

Um ein zuverlässiges Verbiegen des biegeelastischen Lenkers zu erlauben, ist es in diesem Fall dann aber günstig, wenn der Lenker abschnittsweise in einer fest angeordneten Führung geführt ist.

Im Folgenden ist die Erfindung an Hand der Zeichnung näher erläutert. In dieser zeigt
Fig. 1a eine erste Variante einer erfindungsgemäßen Schere in einem ersten Betriebszustand für geringe Schnittkräfte,
Fig. 1b die Schere aus Figur 1a in einem Betriebszustand für große Schnittkräfte,
Fig. 2 eine zweite Variante einer Schere mit manueller Verstellung,
Fig. 3a - 3c eine dritte Variante einer erfindungsgemäßen Schere für große Öffnungswinkel in unterschiedlichen Bewegungszuständen,
Fig. 3d, 3e eine Detailansicht der schlitzförmigen Öffnung einer Schere nach Figur 3a - 3c in unterschiedlichen Bewegungszuständen, und

Die Figuren zeigen jeweils eine elektrische Schere 1, bei welcher in einem nicht dargestellten Scherengehäuse ein feststehendes Messer 101 und ein um eine Drehachse 7 schwenkbar gelagertes bewegliches Messer 102 angeordnet sind.

Weiters ist in dem Gehäuse ein Antrieb 104, vorzugsweise ein elektrischer Motor vorgesehen, welcher beispielsweise ein Spindelhubgetriebe antreibt, welches über eine Anlenkeinrichtung 105 mit dem beweglichen Messer 102 verbunden ist. Die Art der Getriebes und des Antriebes ist im Grunde für die Erfindung aber eher von nebengeordneter Bedeutung, der Antrieb könnte prinzipiell auch manuell erfolgen, und es wird auf diesen Aspekt hier auch nicht näher eingegangen.

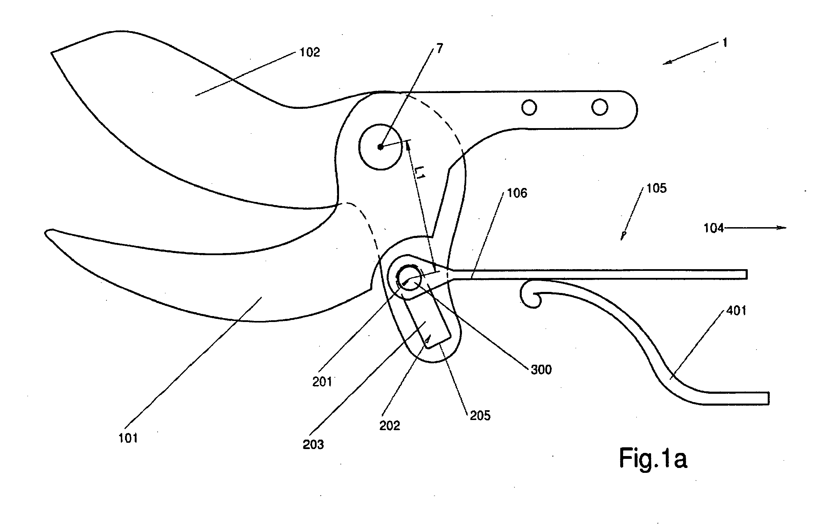

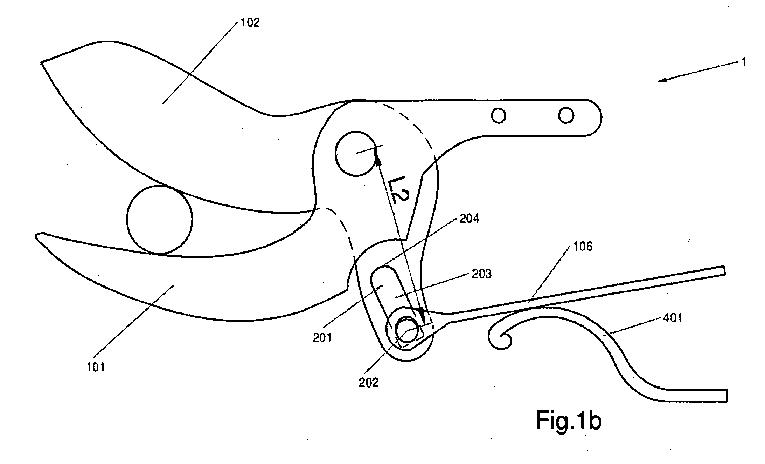

Figur 1a und 1b zeigen eine erste Variante einer erfindungsgemäßen Schere 1. Erfindungsgemäß weist das bewegliche Messer 102 zwei Anlenkpunkte 201, 202 für eine gelenkige Verbindung mit der Anlenkeinrichtung 105 aufweist, wobei die Anlenkeinrichtung 105 einen Lenker 106 umfasst bzw. aus diesem gebildet ist.

Je nach Anlenkpunkt 201, 202, an welchem der Lenker 106 angreift, ergeben sich unterschiedliche Hebellängen L1, L2 in Bezug auf die Drehachse 7 des beweglichen Messers 102. Weiters ist die Anlenkeinrichtung 105, d.h. der Lenker 106 zwischen den beiden Anlenkpunkten 201, 202 umschaltbar.

Dazu weist das bewegliche Messer 102 eine schlitzförmige Öffnung 203 auf, deren Endanschlagsbereiche 204, 205 die beiden Anlenkpunkte 201, 202 für den Lenker 106 definieren. Der Lenker 106 ist in der Öffnung 203 mit z.B. einer Anlenkachse 300 gelenkig mit dem beweglichen Messer 102 verbunden und die Anlenkachse 300 ist in der Öffnung 203 verschiebbar. Durch die verschiebbare Anbringung des Lenkers 106 in der schlitzförmigen Öffnung 203 kann der Lenker 106 sich zwischen den Enden (Endanschlagsbereichen) 204, 205 des Schlitzes bewegen 203, wodurch unterschiedliche Hebellängen L1, L2 um die Drehachse 7 realisiert werden können.

Bei geringen Schneidkräften greift der Lenker am Anlenkpunkt 201, welcher dem kürzeren Hebel L1 entspricht, an, wodurch sich schnellere Schneidbewegungen der Messer 101, 102 realisieren lassen. Bei größeren Schneidkräften wirkt der Lenker 106 über den (unteren) Endanschlagsbereich 205, welcher einen längeren Hebel L2 realisiert. Hier ist ein größerer Weg des Lenkers 106 notwendig, um einen bestimmten Verschwenkweg des beweglichen Messers 102 zu erzielen (im Vergleich zum kürzeren Hebel), allerdings kann dadurch auch mehr Kraft auf das zu schneidende Gut ausgeübt werden.

Der Lenker 106 ist starr ausgebildet und mit dem Antrieb 104 ebenfalls gelenkig verbunden. Damit ein zuverlässiges und vor allem automatisches Verstellen des Hebels 106 je nach notwendiger Schneidkraft möglich ist, ist der starre Lenker 106 gegen die Rückstellkraft eines Rückstellelementes 401 in der schlitzförmigen Öffnung 203 zwischen den beiden Endanschlagsbereichen 204, 205 verstellbar.

In den Figuren 1a, 1b ist ein Rückstellelement 401 dargestellt, welches den Lenker 106 in den oberen Anlenkpunkt 201 drückt. Wird eine höhere Schneidkraft notwendig, d.h. wenn die Messer 101, 102 ein Schneidgut nicht durchtrennen können, drückt die Kraft des Antriebs den Lenker 106 gegen das Rückstellelement 401, dieses gibt nach und der Lenker 106 bewegt sich automatisch in Richtung des längeren Hebels L2, wodurch das Drehmoment, das auf das bewegliche Messer 102 wirken kann, erhöht wird und das Schneidgut durchgeschnitten werden kann.

Figur 1a zeigt jene Situation, in welcher der Lenker 106 über den kürzeren Hebel L1 auf das bewegliche Messer 102 wirkt, Figur 1b zeigt die Situation, in welcher der Lenker 106 sich bereits in seiner unteren Endanschlagsposition 205 befindet (Anlenkpunkt 202), entsprechend wirkt der Lenker 106 hier über einen längeren Hebel L2.

Das Rückstellelement kann natürlich auch anders angeordnet sein oder der Lenker ist biegeelastisch und stellt somit selbst die Rückstellkraft zum automatischen Verstellen zur Verfügung, eine gelenkige Verbindung zum Antrieb hin ist dann u.U. ebenfalls nicht notwendig.

Bei der in Figur 1a und 1b gezeigten Variante der Erfindung ist darauf zu achten, dass die Kinematik zwischen Lenker/ Anlenkeinrichtung und Schlitz 203 derart gewählt ist, dass sich der Lenker 106 bzw. die Anlenkeineinrichtung bei einem Schließvorgang in dem Schlitz 203 von dem Anlenkpunkt mit der kürzesten Hebellänge zu dem Anlenkpunkt mit der längsten Hebellänge hin bewegen kann und nicht durch die Kinematik blockiert ist.

Die Rückstellkraft wie in den Figuren 1a und 1b vorgesehen ist günstig, bei geeignet gewählter Kinematik funktioniert das vorgestellte Prinzip aber auch ohne eine solche Rückstellkraft, d.h. bei einem Schneidvorgang arbeitet der Lenker vorerst über den eingestellten Anlenkpunkt, wenn die Schneidkraft zu gering wird, gleitet der Lenker in dem Schlitz 203 zu einem Anlenkpunkt, welcher eine ausreichend große Hebellänge und entsprechend hohes Drehmoment bietet.

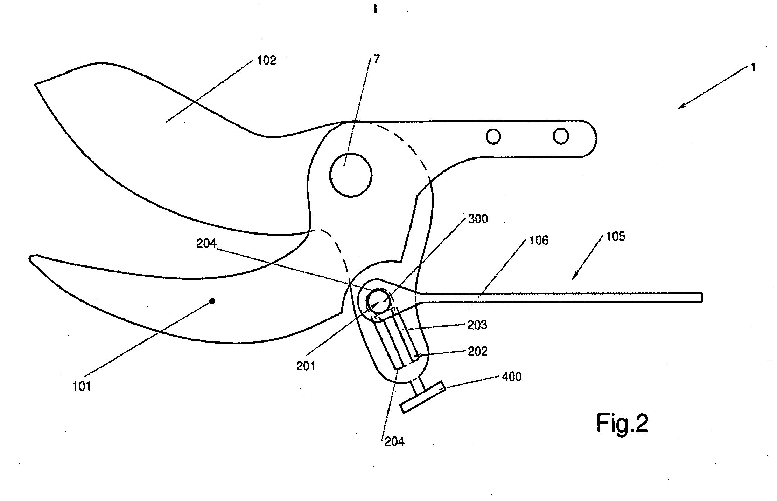

Figur 2 zeigt eine ähnlich aufgebaute Schere 1, bei welcher ein Fixierelement 400 zum gelenkigen Fixieren des Lenkers 106 in zumindest einem Endanschlagsbereich 204 vorgesehen ist. Bei dieser Ausgestaltung ist ein manuelles Umstellen durch den Benutzer notwendig. Der Benutzer kann durch Fixieren des Lenkers 106 mittels des Fixierelementes 400 in der Position 201 mit dem kürzeren Hebel L1 in der Öffnung 203 schnelle Schneidbewegungen erzielen. Sind höhere Schneidkräfte notwendig, kann der Benutzer die Fixierung lösen und der Lenker 106 "gleitet" bei entsprechender Belastung automatisch in die Endanschlagposition 205.

Wie gezeigt kann mit dem Fixierelement 400 in Form einer Art Fixierschraube der Lenker 106 in dem oberen Endanschlagsbereich (kürzerer Hebel) fixiert werden. Wird die Schraube 400 vollständig gelöst, kann sich der Lenker 106 in den unteren Endanschlagsbereich 204 bewegen, wodurch die maximale Hebellänge L2 erreicht wird. Wenn die Fixierschraube 400 derart ausgebildet ist, dass sie auch in Zwischenpositionen fixiert werden kann, lassen sich auch noch weitere Hebellängen einstellen.

Für den Lenker 106 gilt bei dieser Variante das im Wesentlichen selbe wie zu der Variante aus Figur 1a und 1b.

Wird ein Fixierelement verwendet, welches nicht den Bewegungsspielraum des Lenkers 106 wie in Figur 2 beschränkt sondern den Lenker 106 definitiv in einer fixen Position fixiert, ist eine Rückstellkraft nicht notwendig.

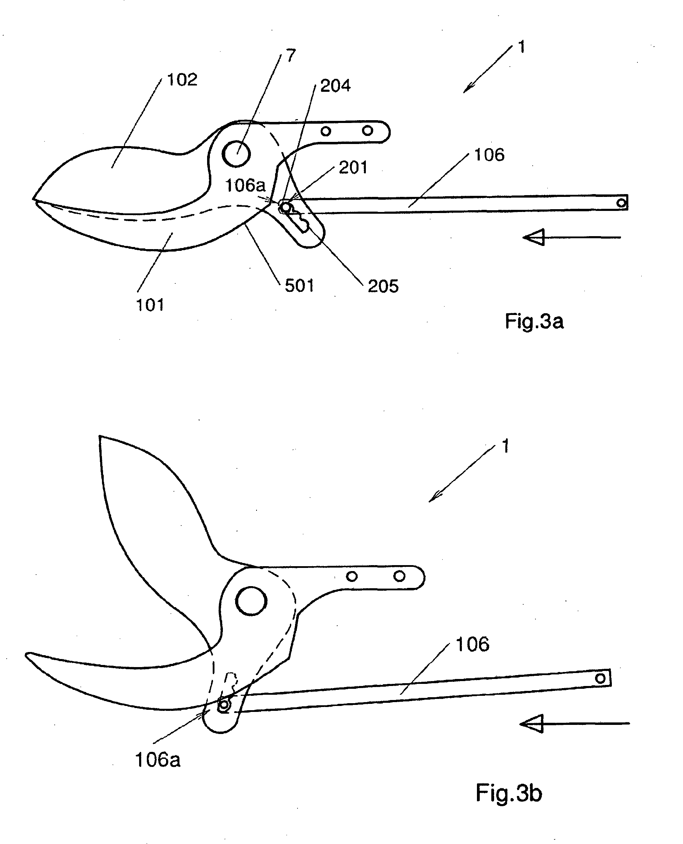

Die Figuren 3a - 3e beschreiben eine dritte Variante einer erfindungsgemäßen Schere 1. Diese Variante erlaubt ein einfaches Umstellen des Lenkers 106 zwischen den Endanschlagsbereichen 204, 205 je nach notwendigem Öffnungswinkel der beiden Messer 101, 102.

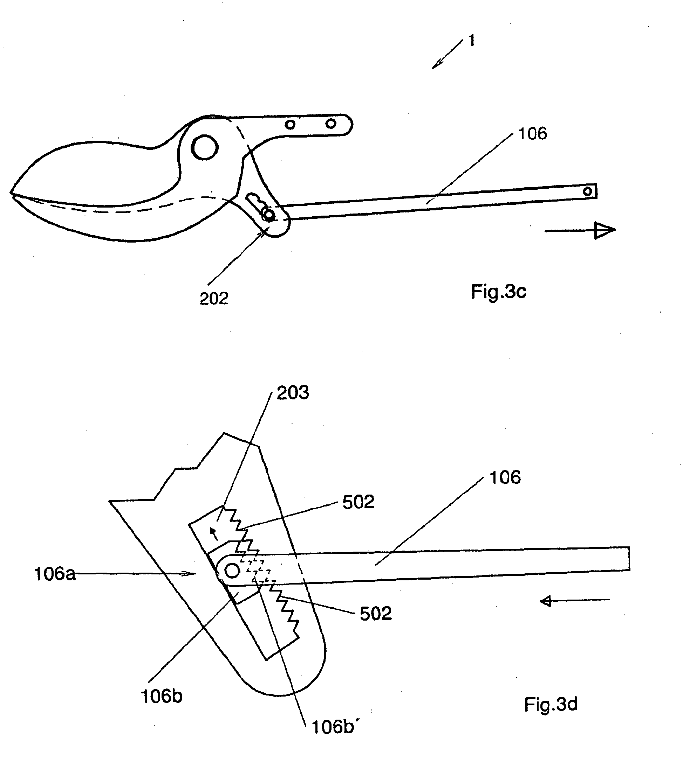

Dazu ist die Außenkontur 501 des feststehenden Messers 101 derart ausgebildet, dass ab einem definierten Öffnungswinkel der beiden Messer 101, 102 der Lenker 106 an der Außenkontur 501 des feststehenden Messers 101 mit einem Auflaufbereich 106a aufläuft (Figur 3b) und mit weiter zunehmendem Öffnungswinkel der Lenker 106 von einem ersten Endanschlagsbereich 204, welcher einer geringeren Hebellänge L1 entspricht, sukzessive in einen zweiten Endanschlagsbereich 205 bewegt wird, welcher einem längeren Hebelarm L2 entspricht (Figur 3c).

Mit zunehmendem Öffnungswinkel kann so der Hebel verlängert und die auf das zu schneidende Gut ausübbare Kraft wird entsprechend erhöht.

Gemäß Figur 3a befindet sich der Lenker 106 in der oberen Position (kürzerer Hebelarm). Eine Hin- und Herbewegung des Lenkers 106 wird in eine Öffen- und Schließ(Schneid-)bewegung des beweglichen Messers 102 umgesetzt. Wird ein größerer Öffnungswinkel der Messer auf Grund eines dickeren Schneidgutes notwendig, so wird der Lenker 106 weiter vom Antrieb weg (in Richtung des Pfeils) bewegt, sodass der Lenker 106 mit seinem Auflaufbereich 106a an der Außenkontur 501 des feststehenden Messers 501 aufläuft und so der Lenker 106 aus dem oberen Endanschlagsbereich nach unten gedrückt wird (Fig. 3b). Figur 3c zeigt den Lenker 106 in der Extremposition des unteren Endanschlagsbereichs 205 (maximaler Hebel L2). Eine Hin- und Herbewegung des Lenkers 106 führt hier zu einer Schneidbewegung des Messers 102 mit diesem größeren Hebel L2.

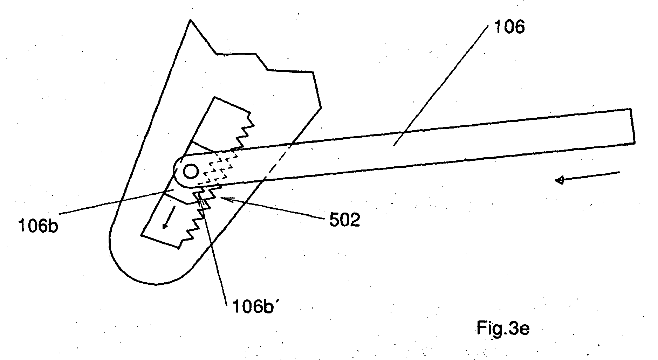

Von besonderem Vorteil ist es bei dieser Variante, wenn die schlitzförmige Öffnung 203 zwischen ihren beiden Endanschlagsbereichen 204, 205 eine Rasterung 502 zum lösbaren Einrasten des Lenkers 106 aufweist. Dieses Detail ist in den Figuren 3a - 3c bereits angedeutet und im Detail in Figur 3d und 3e dargestellt.

Bei einer solchen Ausgestaltung ist der Lenker 106 einerseits stabil in den gewählten Endanschlagsbereichen 204, 205 gehalten, es können aber auch noch Zwischenpositionen realisiert werden, sodass das bewegliche Messer 102 mit unterschiedlich großen maximalen Öffnungswinkeln und entsprechend unterschiedlich großen Hebellängen bewegt werden kann.

Wie den Figuren 3d und 3e zu entnehmen ist, verfügt der Lenker 106 beispielsweise über einen Einrastabschnitt 106b (Einrastelement), der in der Öffnung 203 zwischen den Endanschlagsbereichen 204, 205 verschiebbar ist; der Einrastabschnitt 106b ist mit einem Ende (dem antriebsfernen Ende) mit dem Lenker 106 gelenkig verbunden, und der Einrastabschnitt 106b weist korrespondierende Rasterungen 106b' zum Einrasten in die Rasterung 502 auf. Wird der Lenker 106 dabei wie in Figur 3d bzw. 3e dargestellt in Richtung des Pfeils bewegt, löst sich der Einrastabschnitt 106b aus der Rasterung 502 und kann entsprechend der Bewegung entlang der Außenkontur 501 des festen Messer 102 nach unten verschoben werden (Figur 3e). Bei einer Schneidbewegung (Bewegung des Lenkers 106 entgegen der Richtung des Pfeils) rastet der Einrastabschnitt 106b in die Rasterung 502 an der entsprechenden Position ein.

Nach Beenden der Schneidbewegung (geschlossenes Messer) löst sich der Einrastabschnitt 106b bei einer Bewegung des Lenkers 106 in Richtung des Pfeils wieder aus der Rasterung 502 und gleitet (schiefe Ebene) in die oberste Position 201 (kleiner Hebel, schnelle Bewegung des Messers). In dieser verbleibt er dann (eingerastet) bei der Schneidbewegung, falls kein größerer Öffnungswinkel notwendig wird.

Eine Rückstellkraft für den Lenker ist nicht unbedingt notwendig, kann aber von Vorteil sein.

Die Verwendung der Außenkontur des feststehenden Messers bietet den Vorteil, dass man von der Kinematik zwischen Lenker und Schlitz 203 relativ unabhängig ist. Das von der Außenkontur beschriebene Umstellen kann aber auch lediglich mit dem Schlitz alleine erreicht werden, eine bestimmte Außenkontur des feststehenden Messers ist dann nicht notwendig.

Wesen der Erfindung ist es ja, und dies betrifft alle gezeigten Varianten, dass Mittel zum Umschalten vorgesehen sind, welche die Anlenkeinrichtung 105 bzw. den Lenker 106 zwischen den Anlenkpunkten umschalten, und zwar in Abhängigkeit vom Öffnungswinkel der beiden Messer 101, 102. Bei geringem Öffnungswinkel oder geschlossenen Messern greift dabei die Anlenkeinrichtung an jenem Anlenkpunkt an, welcher der kürzesten Hebellängen entspricht, und mit zunehmendem Öffnungswinkel und/oder größerer notwendiger Schneidkraft wird die Anlenkeinrichtung durch die Umschaltmittel zu größeren Hebellängen hin verschoben.

Bei der Variante nach Figur 3a - 3e können diese Umschaltmittel an Stelle der Außenkontur des feststehenden Messers auch durch die Anordnung der schlitzförmigen Öffnung 203 in Bezug auf den Lenker 106 realisiert werde, und zwar nehmen bei einem Öffnungswinkel der Messer von 0° die Längsachse des Lenkers 106 und die Längsachse des Schlitzes einen Winkel < 90° ein, wobei bei einem Öffnen der Messer (bewegen des Lenkers 106 nach links) ab einem gewissen Öffnungswinkel der Messer der Winkel von 90° überschritten wird. Bei einem noch weiteren Öffnen der Messer wird der Lenker 106 in dem Schlitz nun sukzessive von dem Angriffspunkt 201 mit der kürzesten Hebellänge L1 in Richtung Anlenkpunkt 202 hin verschoben, wozu die eine Innenfläche des Schlitzes 203 glatt ausgebildet ist, an welcher der Einrastabschnitt 106b mit einer glatten Fläche in Richtung größerer Hebellänge gleiten kann. Bei einem Schließen der Messer zum Schneiden eines Gegenstandes wird diese Hebellänge nun wie oben zu den Figuren 3a - 3e beschrieben beibehalten, sodass mit einer Schneidkraft, welche der Dicke des zu schneidenden Gegenstandes angepasst ist, geschnitten wird. Ein Ausweichen des Lenkers während des Schneidens zu kürzeren Hebellängen hin ist nicht möglich.

## Patentansprüche

1. Schere (1), mit einem feststehenden Messer (101) und einem um eine Drehachse (7) schwenkbar gelagerten beweglichen Messer (102), mit einem Antrieb (104), welcher eine Anlenkeinrichtung (105) antreibt, und wobei die Anlenkeinrichtung (105) mit dem beweglichen Messer (102) verbunden ist, wobei das bewegliche Messer (102) zumindest zwei Anlenkpunkte (201, 202) für eine gelenkige Verbindung mit der Anlenkeinrichtung (105) aufweist, und wobei die Anlenkeinrichtung (105) je nach Anlenkpunkt (201, 202), an welchem sie angreift, unterschiedliche Hebellängen (L1, L2) in Bezug auf die Drehachse (7) des beweglichen Messers (102) aufweist, und wobei die Anlenkeinrichtung (105) zwischen den beiden Anlenkpunkten (201, 202) umschaltbar ist, und wobei das bewegliche Messer (102) eine schlitzförmige Öffnung (203) aufweist, deren Endanschlagsbereiche (204, 205) die beiden äußeren Anlenkpunkte (201, 202) für die Anlenkeinrichtung (105) bilden,
**dadurch gekennzeichnet, dass** die Anlenkeinrichtung (105) aus einem Lenker (106) besteht, und
die Außenkontur (501) des feststehenden Messers (101) derart ausgebildet oder die kinematische Beziehung zwischen dem Lenker (106) und der schlitzförmigen Öffnung (203) derart gewählt ist, dass ab einem definierten Öffnungswinkel der beiden Messer (101, 102) der Lenker (106) an der Außenkontur (501) des feststehenden Messers (101) mit einem Auflaufbereich (106a) aufläuft und mit weiter zunehmendem Öffnungswinkel der Lenker (106) von einem ersten Endanschlagsbereich (204), welcher einer geringeren Hebellänge entspricht, sukzessive in einen zweiten Endanschlagsbereich (205) bewegt wird, welcher einem längeren Hebelarm entspricht, oder
die Anordnung der schlitzförmigen Öffnung (203) in Bezug auf den Lenker (106) derart ist, dass bei einem Öffnen der Messer ab einem gewissen Öffnungswinkel der Messer der Lenker (106) in der schlitzförmigen Öffnung (203) von dem ersten äußeren Anlenkpunkt (201) mit der kürzesten Hebelänge (L1) in Richtung des zweiten äußeren Anlenkpunktes (202) zu größeren Hebellängen hin verschoben wird, und bei einem Schließen der Messer zum Schneiden die aktuelle Hebellänge beibehalten wird.

2. Schere nach Anspruch 1, **dadurch gekennzeichnet, dass** ein Fixierelement (400) zum gelenkigen Fixieren des Lenkers (106) in zumindest einem Endanschlagsbereich (204) vorgesehen ist.

3. Schere nach Anspruch 1 oder 2, **dadurch gekennzeichnet, dass** die schlitzförmige Öffnung (203) zwischen ihren beiden Endanschlagsbereichen (204, 205) eine Rasterung (502) zum lösbaren Einrasten des Lenkers (106) aufweist.

4. Schere nach einem der Ansprüche 1 bis 3, **dadurch gekennzeichnet, dass** der Lenker (106) starr ausgebildet und mit dem Antrieb (104) gelenkig verbunden ist.

5. Schere nach Anspruch 4, **dadurch gekennzeichnet, dass** der Lenker (106) gegen die Rückstellkraft von zumindest einem Rückstellelement (401) zwischen den beiden Endanschlagsbereichen (204, 205) verstellbar ist.

6. Schere nach einem der Ansprüche 1 bis 3, **dadurch gekennzeichnet, dass** der Lenker biegeelastisch ausgebildet ist.

7. Schere nach Anspruch 6, **dadurch gekennzeichnet, dass** der Lenker abschnittsweise in einer fest angeordneten Führung geführt ist.

8. Schere nach einem der Ansprüche 1 bis 7, **dadurch gekennzeichnet, dass** sie als elektrische Schere (1) ausgebildet ist, bei welcher der Antrieb (104) ein elektrischer Antrieb ist.

## Claims

1. Scissors (1) comprising a fixed blade (101) and a movable blade (102), which is supported so as to be pivotable about a rotational axis (7), comprising a drive (104), which drives a linking device (105), and wherein the linking device (105) is connected to the movable blade (102), wherein the movable blade (102) has at least two linking points (201, 202) for an articulated connection to the linking device (105), and wherein the linking device (105) has different lever lengths (L1, L2) relative to the rotational axis (7) of the movable blade (102) depending on which linking point (201, 202) said linking device acts, and wherein the linking device (105) can be switched between the two linking points (201, 202), and wherein the movable blade (102) has a slot-shaped opening (203), the end stop regions (204, 205) of which form the two outer linking points (201, 202) for the linking device (105),
**characterized in that** the linking device (105) is a connecting rod (106), and
the outer contour (501) of the fixed blade (101) is designed such that, or the kinematic relationship between the connecting rod (106) and the slot-shaped opening (203) is selected such that, starting at a defined angle of opening of the two blades (101, 102), the connecting rod (106) contacts the outer contour (501) of the fixed blade (101) via a contact region (106a) and, as the angle of opening increases, the connecting rod (106) is successively moved from a first end stop region (204), which corresponds to a shorter lever length, into a second end stop region (205), which corresponds to a longer lever arm, or
the arrangement of the slot-shaped opening (203) relative to the connecting rod (106) is such that, as the blades open beyond a certain angle of opening of the blades, the connecting rod (106) is displaced in the slot-shaped opening (203) from the first outer linking point (201) having the shortest lever length (L1) in the direction of the second outer linking point (202) toward greater lever lengths, and the current lever length is retained when the blades are closed for cutting.

2. The scissors according to claim 1, **characterized in that** a fixing element (400) is provided in at least one end stop region (204) for affixing the connecting rod (106) in an articulated manner.

3. The scissors according to claim 1 or 2, **characterized in that** the slot-shaped opening (203) comprises, between the two end stop regions (204, 205) thereof, a snap-in region (502) for the releasable engagement of the connecting rod (106).

4. The scissors according to any one of the claims 1 to 3, **characterized in that** the connecting rod (106) is rigid and is connected to the drive (104) in an articulated manner.

5. The scissors according to claim 4, **characterized in that** the connecting rod (106) is displaceable between the two end stop regions (204, 205) against the return force of at least one return element (401).

6. The scissors according to any one of the claims 1 to 3, **characterized in that** the connecting rod is flexurally resilient.

7. The scissors according to claim 6, **characterized in that** the connecting rod is guided, in sections, in a fixedly disposed guide.

8. The scissors according to any one of the claims 1 to 7, **characterized in that** these are designed as electrical scissors (1), in which the drive (104) is an electrical drive.

## Revendications

1. Ciseaux (1) avec une lame fixe (101) et une lame (102) mobile logée de manière pivotante autour d'un axe de rotation (7), avec un entraînement (104) qui entraîne un dispositif d'articulation (105), et le dispositif d'articulation (105) étant relié à la lame mobile (102), la lame mobile (102) présentant au moins deux points d'articulation (201, 202) pour une liaison articulée avec le dispositif d'articulation (105), et le dispositif d'articulation (105) présentant selon le point d'articulation (201, 202) sur lequel il agit différentes longueurs de levier (L1, L2) par rapport à l'axe de rotation (7) de la lame mobile (102), et le dispositif d'articulation (105) pouvant être commuté entre les deux points d'articulation (201, 202), et la lame mobile (102) présentant une ouverture en forme de fente (203), dont les zones de butée d'extrémité (204, 205) forment les deux points d'articulation extérieurs (201, 202) pour le dispositif d'articulation (105),
**caractérisés en ce que** le dispositif d'articulation (105) se compose d'une bielle (106), et
le contour extérieur (501) de la lame fixe (101) est réalisé de telle manière ou le rapport cinématique entre la bielle (106) et l'ouverture en forme de fente (203) est choisi de telle manière qu'à partir d'un angle d'ouverture défini entre les deux lames (101, 102), la bielle (106) monte sur le contour extérieur (501) de la lame fixe (101) avec une zone de montée (106a) et lorsque l'angle d'ouverture augmente davantage la bielle (106) est déplacée d'une première zone de butée d'extrémité (204), qui correspond à une longueur de levier moindre, successivement dans une seconde zone de butée d'extrémité (205), qui correspond à un bras de levier plus long, ou
l'agencement de l'ouverture en forme de fente (203) par rapport à la bielle (106) est tel que lors d'une ouverture des lames à partir d'un certain angle d'ouverture des lames la bielle (106) est déplacée dans l'ouverture en forme de fente (203) du premier point d'articulation extérieur (201) avec la plus courte longueur de levier (L1) en direction du second point d'articulation extérieur (202) vers de plus grandes longueurs de levier et la longueur de levier actuelle est conservée lors d'une fermeture des lames pour la coupe.

2. Ciseaux selon la revendication 1, **caractérisés en ce qu'**un élément de fixation (400) est prévu pour la fixation articulée de la bielle (106) dans au moins une zone de butée d'extrémité (204).

3. Ciseaux selon la revendication 1 ou 2, **caractérisés en ce que** l'ouverture en forme de fente (203) présente, entre ses deux zones de butée d'extrémité (204, 205), un élément d'encliquetage (502) pour l'encliquetage amovible de la bielle (106).

4. Ciseaux selon l'une quelconque des revendications 1 à 3, **caractérisés en ce que** la bielle (106) est réalisée de manière rigide et est reliée de manière articulée à l'entraînement (104).

5. Ciseaux selon la revendication 4, **caractérisés en ce que** la bielle (106) peut être déplacée contre la force de rappel d'au moins un élément de rappel (401) entre les deux zones de butée d'extrémité (204, 205).

6. Ciseaux selon l'une quelconque des revendications 1 à 3, **caractérisés en ce que** la bielle est réalisée de manière élastique en flexion.

7. Ciseaux selon la revendication 6, **caractérisés en ce que** la bielle est guidée par sections dans un guidage fixe.

8. Ciseaux selon l'une quelconque des revendications 1 à 7, **caractérisés en ce qu'**ils sont réalisés comme des ciseaux électriques (1) pour lesquels l'entraînement (104) est un entraînement électrique.
